# EUROPEAN PATENT APPLICATION

(11) **EP 4 841 459 A1**
(43) Date of publication of application: **18.11.2026**
(21) Application number: 26150017.7
(22) Date of filing: 02.01.2026
(51) Int. Cl.: G06F 16/23, G06F 16/901

(54) **TRANSACTION PROCESSING METHOD FOR GRAPH DATABASE, DEVICE, STORAGE MEDIUM AND PROGRAM PRODUCT**

(30) Priority: 15.05.2025 CN 202510627255
(71) Applicant: Beijing Zitiao Network Technology Co., Ltd., Beijing 100190 (CN); Bytedance Technology Ltd., KY1 - 1205 Grand Cayman Cayman Islands (KY)
(72) Inventor: CHEN, Chao, Beijing, 100028 (CN); CHEN, Cheng, 018960 Singapore (SG); ZHU, Huiming, Beijing, 100028 (CN); YANG, Shijiao, Beijing, 100028 (CN); HU, Yingqian, Beijing, 100028 (CN); ZENG, Zhigang, Beijing, 100028 (CN); ZHANG, Wei, Beijing, 100028 (CN); ZHOU, Bingyu, Beijing, 100028 (CN); CHENG, Miaomiao, Beijing, 100028 (CN); XIAO, Lei, Beijing, 100028 (CN); YANG, Ping, Beijing, 100028 (CN); WANG, Ye, Beijing, 100028 (CN); ZHANG, Shuai, Beijing, 100028 (CN); ZHANG, Lei, Beijing, 100028 (CN); ZHAO, Pengwei, Beijing, 100028 (CN)
(74) Representative: Isarpatent

(57) **Abstract**

The present disclosure provides a transaction processing method for a graph database, device, a storage medium, and a program product. The method includes: creating a new version of target graph data in a first memory space used by the graph database and adding a pointer to a previous version of the target graph data in the new version of the target graph data, in response to an update instruction for the target graph data in the graph database, where the pointer is used for associating the new version of the target graph data with the previous version (S201); persisting a latest version of the target graph data in the first memory space to a disk of the graph database at intervals of a first preset time (S202); and migrating an old version of the target graph data in the first memory space to a second memory space used by the graph database (S203).

## Description

### TECHNICAL FIELD

The present disclosure relates to a transaction processing method for a graph database, device, a storage medium, and a program product.

### BACKGROUND

A graph database is a database dedicated to efficiently storing, querying, and processing relational data, and uses a graph structure (nodes, edges, attributes) to directly represent the data and its associations.

Transactions such as OLAP (Online Analytical Processing) transactions and OLTP (Online Transaction Processing) transactions in the graph database need to implement snapshot isolation (SI), which is usually implemented through multi-version concurrency control (MVCC).

However, due to the characteristics of the workload of the graph database, implementing snapshot isolation may lead to excessive historical versions of graph data, which occupies a large amount of resources and affects system performance.

### SUMMARY

At least one embodiment of the present disclosure provides a transaction processing method for a graph database, device, a storage medium, and a program product.

At least one embodiment of the present disclosure provides a transaction processing method for a graph database, including:
creating a new version of target graph data in a first memory space used by the graph database, and adding a pointer to a previous version of the target graph data in the new version of the target graph data in response to an update instruction for the target graph data in the graph database, where the pointer is used for associating the new version of the target graph data with the previous version of the target graph data;
persisting a latest version of the target graph data in the first memory space to a disk of the graph database at intervals of a first preset time; and
migrating an old version of the target graph data in the first memory space to a second memory space used by the graph database.

At least one embodiment of the present disclosure provides a transaction processing device for a graph database, including:
an update unit, configured to, in response to an update instruction for target graph data in a graph database, create a new version of the target graph data in a first memory space used by the graph database, and add a pointer to a previous version of the target graph data in the new version of the target graph data, where the pointer is used for associating the new version of the target graph data with the previous version of the target graph data; and
a graph data management unit, configured to persist a latest version of the target graph data in the first memory space to a disk of the graph database at intervals of a first preset time, and migrate an old version of the target graph data in the first memory space to a second memory space used by the graph database.

At least one embodiment of the present disclosure provides an electronic device, including a processor and a memory;
the memory has computer-executable instructions stored thereon; and
the processor is configured to execute the computer-executable instructions stored in the memory to execute the transaction processing method for the graph database described above.

At least one embodiment of the present disclosure provides a computer-readable storage medium, where computer-executable instructions are stored in the computer-readable storage medium, and when the computer-executable instructions are executed by a processor, the transaction processing method for the graph database described above is implemented.

At least one embodiment of the present disclosure provides a computer program product, including a computer program, where when the computer program is executed by a processor, the transaction processing method for the graph database described above is implemented.

### BRIEF DESCRIPTION OF DRAWINGS

In order to more clearly illustrate the technical solutions in the present disclosure, the following briefly introduces the drawings that are used in present disclosure. Obviously, the drawings in the following description are some embodiments of the present disclosure, and for those of ordinary skill in the art, other drawings may also be obtained from these drawings without any creative effort.
Fig. 1 is an example diagram of transaction processing of a graph database;
Fig. 2 is a schematic flowchart of a transaction processing method for a graph database provided by at least one embodiment of the present disclosure;
Fig. 3 is a schematic flowchart of a transaction processing method for a graph database provided by at least another embodiment of the present disclosure;
Fig. 4 is a structural block diagram of a transaction processing device for a graph database provided by at least one embodiment of the present disclosure; and
Fig. 5 is a schematic hardware structural diagram of an electronic device provided by at least one embodiment of the present disclosure.

### DETAILED DESCRIPTION

In order to make the objectives, technical solutions, and advantages of the embodiments of the present disclosure clearer, the technical solutions in the embodiments of the present disclosure will be described clearly and comprehensively with reference to the drawings in the embodiments of the present disclosure. Obviously, the described embodiments are part of the embodiments of the present disclosure, but not all of the embodiments. All other embodiments obtained by those of ordinary skill in the art based on the embodiments of the present disclosure without any creative effort shall fall within the protection scope of the present disclosure.

Transactions such as OLAP transactions and OLTP transactions in the graph database need to implement snapshot isolation (SI), which is usually implemented through multi-version concurrency control (MVCC).

The mechanism of multi-version concurrency control is that when multiple transactions are executed concurrently, the system provides a specific version snapshot of data for each transaction to ensure isolation between the transactions, maintain a consistent data view at its beginning for each transaction, and prevent mutual interference between the transactions. Multi-version concurrency control relies on a version chain, which organizes different versions, usually through pointer linking, to form a linked list structure, allowing read operations not to block write operations, and write operations not to block read operations. Different transactions may access different versions of the same data, reducing lock contention.

The OLAP transaction is generally complex data analysis based on target graph data, and usually has a long execution time, while the OLTP transaction is generally a daily high-frequency operation based on the target graph data, such as addition, deletion, modification, and query, and usually has a short execution time.

However, due to the characteristics of the workload of the graph database, implementing snapshot isolation may lead to excessive historical versions of graph data, which occupies a large amount of resources and affects system performance. The details are as follows.

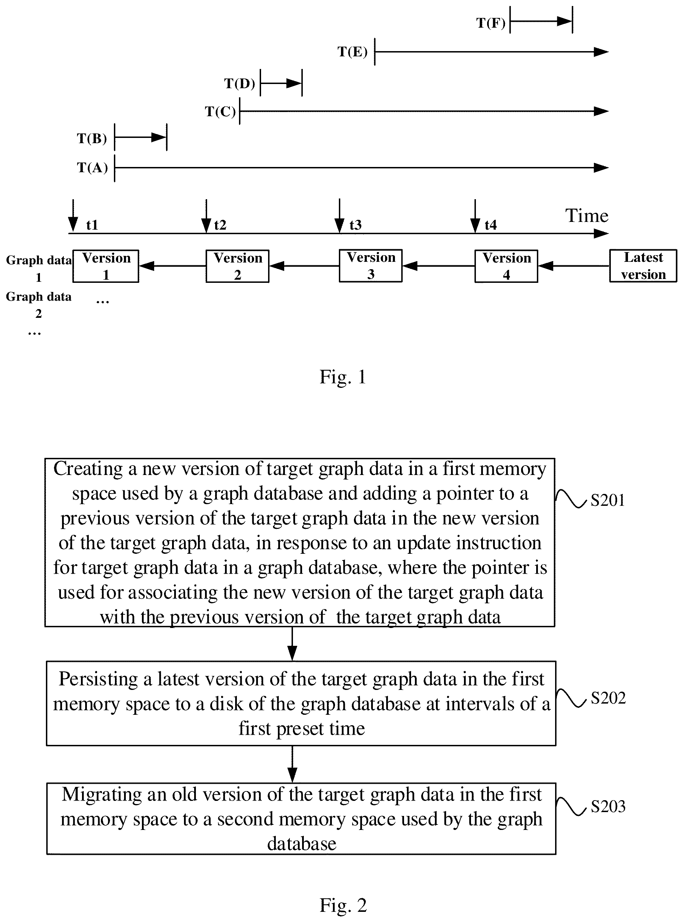

Data writing of the OLTP transaction and the OLAP transaction occur concurrently, which complicates the cleaning of historical versions. As shown in Fig. 1, graph data 1 has multiple versions from Version1 to Version4. Meanwhile, T(A), T(C), and T(E) are all OLAP transactions and depend on different historical versions of the graph data 1. The traditional MVCC recovery mechanism may only recover the historical version that is depended on after the oldest transaction ends, so none of Version1 to Version4 may be recovered.

However, most OLTP transactions are executed very fast, and therefore, there are far fewer historical versions need to be maintained than for the OLAP transaction. For example, transactions T(B), T(D), and T(F) are all OLTP transactions, which may be completed quickly and no longer depend on the corresponding versions, that is, Version1, Version2, and Version4, after the completion.

There are mainly two reasons for the degradation of system performance caused by the mixing of OLTP and OLAP transactions. One reason is the amplification of disk I/O. Due to the long execution time of the OLAP transaction, many historical data versions are accumulated, which may not be completely stored in the memory. As a result, snapshots of a large number of data versions need to be written into the disk. Especially in a high-concurrency scenario, where a large number of transactions are performed simultaneously, frequent read and write operations of historical versions seriously affect the read and write performance. The other reason is the consumption of CPU resources for historical version retrieval. Since a large number of historical versions are located at the end of the version chain, a large number of unnecessary versions need to be traversed when a specific version is retrieved, and each retrieval will additionally consume a large amount of CPU resources. Meanwhile, due to the long running time of some OLAP transactions, these historical versions may take dozens of minutes to be completely cleaned up, and because long transactions will continue to be generated, intermediate versions may not be directly reclaimed in advance. As shown in Fig. 1, most versions are depended on by different long transactions (T(A), T(C), and T(E)), and even if an attempt is made to reclaim the short transaction version in the middle, a large number of historical versions still may not be cleaned up. Meanwhile, when the workload is further analyzed, the throughput of OLTP is usually very high, and most operations do not require the implementation of snapshot isolation. Therefore, the main challenge currently faced is how to optimize the implementation of snapshot isolation for different latency requirements of OLAP and OLTP transactions on the graph to minimize the impact on system performance.

In summary, there are the following problems: the amplification of disk I/O, where a large number of historical versions are accumulated due to the long-time execution of an OLAP transaction, and the versions need to be written into a disk when the memory may not store the versions completely, and frequent reading and writing seriously affects the performance in a high-concurrency scenario; and the consumption of CPU resources for version retrieval when a transaction is executed, where a large number of historical versions are located at the end of a version chain, and a large number of unnecessary versions need to be traversed to retrieve a specific version, which consumes a large amount of CPU resources.

In order to solve the above technical problems, at least one embodiment of the present disclosure provides a transaction processing method for a graph database. **In** the method, a new version of target graph data is created in a first memory space used by a graph database in response to an update instruction for the target graph data in the graph database, and a pointer to a previous version of the target graph data is added in the new version of the target graph data, where the pointer is used for associating the new version of the target graph data with the previous version of the target graph data; a latest version of the target graph data in the first memory space is persisted to a disk of the graph database at intervals of a first preset time; and an old version of the target graph data in the first memory space is migrated to a second memory space used by the graph database. **In** the embodiment, by periodically persisting the latest version of the target graph data in the first memory space to the disk of the graph database, the count of times of persisting to the disk may be reduced, and by migrating the old version of the target graph data in the first memory space to the second memory space used by the graph database for subsequent use or reconstruction of a version chain, the occupancy of the first memory space may be reduced to ensure the stability of a service, and it is convenient to uniformly perform garbage collection on old versions, reduce the count of versions, reduce resource consumption, and improve system performance.

The enabling of related functions, acquired data, data processing and storage manners, and the like in at least one embodiment of the present disclosure shall be authorized in advance by the user and other rights subjects associated with the user, and shall comply with the provisions of relevant laws and regulations and agreement rules between rights subjects.

The transaction processing method for the graph database according to the present disclosure will be described in detail below with reference to specific embodiments.

Referring to Fig. 2, Fig. 2 is a schematic flowchart of a transaction processing method for a graph database provided by at least one embodiment of the present disclosure. The method of this embodiment may be applied to an electronic device such as a terminal device or a server. The transaction processing method for the graph database includes the following.

S201: creating a new version of target graph data in a first memory space used by the graph database and adding a pointer to a previous version of the target graph data in the new version of the target graph data, in response to an update instruction for the target graph data in a graph database, where the pointer is used for associating the new version of the target graph data with the previous version of the target graph data.

In this embodiment, the graph database may include a plurality of pieces of graph data, where the graph data includes nodes and edges connecting the nodes, the nodes may represent entities, such as people, places, products, events, and the like, and the edges may represent connection relationships between the nodes. When the user needs to update the target graph data, including but not limited to adding, deleting, and modifying at least one of at least one node or at least one edge of the target graph data, the update instruction for the target graph data may be triggered, and then the new version of the target graph data may be created in the first memory space used by the graph database. The new version of the target graph data is the updated version of the target graph data.

After each update, a pointer to the previous version may be added in each version of the target graph data, and the new version of the target graph data is associated with the previous version the target graph data through the pointer. The version chain of the target graph data may be constructed through the pointer, so that a required version may be quickly located when any version of the target data needs to be searched for or used. After the new version of the target graph data is created, the pointer to the previous version may also be added in the new version, so that the new version may be added to the version chain of the target graph data through the pointer.

S202: persisting a latest version of the target graph data in the first memory space to a disk of the graph database at intervals of a first preset time.

In this embodiment, the latest version of the target graph data in the first memory space is persisted to the disk of the graph database at intervals of the first preset time, and there is no need to persist each version of the target graph data to the disk of the graph database, which may reduce the number of times of persisting to the disk, avoid occupying too many resources and affecting performance due to frequent writing of each version of the target graph data into the disk in a high-concurrency scenario, and at the same time, reduce the count of versions of the target graph data in the disk.

S203: migrating an old version of the target graph data in the first memory space to a second memory space used by the graph database.

In this embodiment, the old version of the target graph data in the first memory space is migrated to the second memory space used by the graph database for subsequent use or reconstruction of a version chain, which may also prevent the old version from occupying too much space in the first memory space, and ensure that there is enough remaining space in the first memory space to continue creating a new version of the target graph data or a new version of other graph data. Moreover, the second memory space stores only old versions of each piece of graph data, which also facilitates unified garbage collection and reduces the count of versions. During a specific implementation, during the migration, the old version of the target graph data in the first memory space may be found based on the pointer, and after the old version is migrated to the second memory space, the pointers in each version of the target graph data in the first memory space and the second memory space may be updated.

Optionally, when the remaining space of the first memory space is less than a preset threshold (or the usage of the first memory space exceeds a preset usage), or at intervals of the first preset time, the old version of the target graph data in the first memory space may be migrated to the second memory space used by the graph database, which may implement batch version migration, avoid frequent version migration, and avoid occupying too many resources. Alternatively, when the first memory space is fully occupied (which is equivalent to that the remaining space of the first memory space is 0), the old version of the target graph data in the first memory space may be migrated to the second memory space.

According to the transaction processing method for the graph database provided by this embodiment, a new version of target graph data is created in a first memory space used by a graph database in response to an update instruction for the target graph data in the graph database, and a pointer to a previous version of the target graph data is added in the new version of the target graph data, where the pointer is used for associating the new version of the target graph data with the previous version of the target graph data; a latest version of the target graph data in the first memory space is persisted to a disk of the graph database at intervals of a first preset time; and an old version of the target graph data in the first memory space is migrated to a second memory space used by the graph database. In the embodiment, by periodically persisting the latest version of the target graph data in the first memory space to the disk of the graph database, the count of times of persisting to the disk may be reduced, and by migrating the old version of the target graph data in the first memory space to the second memory space used by the graph database for subsequent use or reconstruction of a version chain, the occupancy of the first memory space may be reduced to ensure the stability of a service, and it is convenient to uniformly perform garbage collection on old versions, reduce the count of versions, reduce resource consumption, and improve system performance.

Based on any of the above embodiments, the method further includes:
filtering an old version to be reclaimed from old versions of the target graph data in the second memory space, and performing garbage collection on the old version to be reclaimed, where the old version to be reclaimed is an old version with a creation time being more than a second preset time away from a current time, and the second preset time is greater than or equal to the first preset time.

In this embodiment, one or more old versions of the target graph data are cached in the second memory space, but since the storage space of the second memory space is limited, and in order to avoid too many versions of the target graph data, garbage collection may be performed on the old versions of the target graph data in the second memory space. Specifically, the retention time of the old version is controlled, for example, the second preset time is retained, that is, in response to the creation time of an old version being more than the second preset time away from the current time, garbage collection needs to be performed on the old version. Therefore, based on the second preset time, the old version to be reclaimed may be filtered from the old versions of the target graph data in the second memory space, where the old version to be reclaimed is an old version with a creation time being more than the second preset time away from the current time, and then garbage collection may be performed on the old version to be reclaimed. The second preset time may be greater than or equal to the first time interval in the above embodiments, so that the availability of the old version before the latest version is persisted may be ensured, and the old version may be prevented from being cleaned up before the latest version is persisted, and it may be ensured that the old version may be rolled back to when the persistence process of the latest version fails or the latest version is lost. In addition, the old version in the second memory space may also be used by subsequent transactions or used to construct the version chain of the target graph data.

It should be noted that when garbage collection is performed on the old version to be reclaimed, the pointer in the version after the old version to be reclaimed may be updated, and the pointer in the version after the old version to be reclaimed is pointed to the version before the old version to be reclaimed, so as to ensure that the version chain of the target graph data may be reconstructed according to the pointer and the connection of the version chain is ensured.

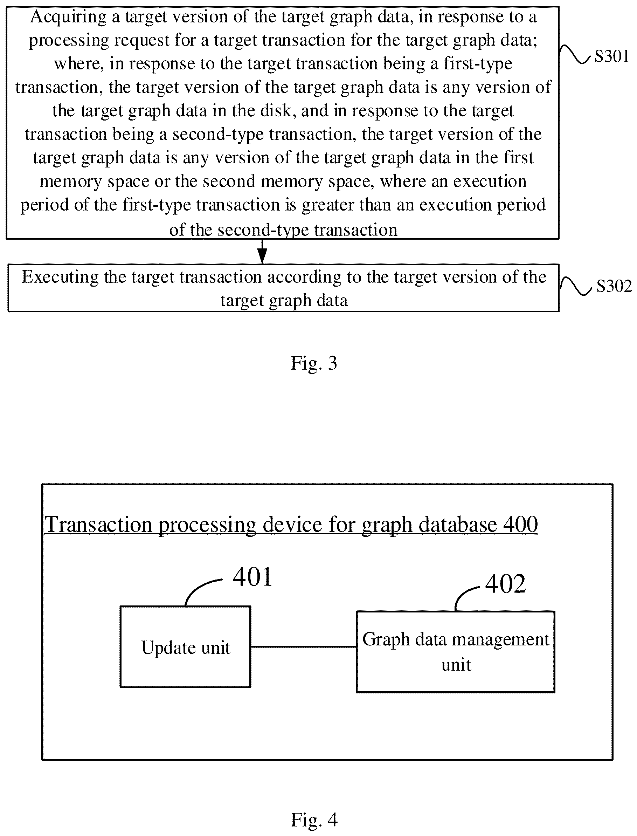

Based on any of the above embodiments, as shown in Fig. 3, the method further includes:
S301: acquiring a target version of the target graph data in response to a processing request for a target transaction for the target graph data, where the target version of the target graph data is any version of the target graph data in the disk in response to the target transaction being a first-type transaction, and the target version of the target graph data is any version of the target graph data in the first memory space or the second memory space in response to the target transaction being a second-type transaction,, where an execution period of the first-type transaction is greater than an execution period of the second-type transaction; and

S302: executing the target transaction according to the target version of the target graph data.

In this embodiment, the target transaction for the target graph data, that is, a transaction that needs to access or use the target graph data, may specifically include but is not limited to an OLAP transaction, an OLTP transaction, etc. The OLAP transaction is generally complex data analysis based on the target graph data, and usually has a long execution time, while the OLTP transaction is generally a daily high-frequency operation based on the target graph data, such as addition, deletion, modification, and query, and usually has a short execution time. Therefore, based on the execution period, the target transaction may be divided into the first-type transaction and the second-type transaction, where the execution period of the first-type transaction is greater than the execution period of the second-type transaction. The OLAP transaction may belong to the first-type transaction, and the OLTP transaction may belong to the second-type transaction. More specifically, the execution period of the first-type transaction is greater than or equal to a preset time period threshold, and the execution period of the second-type transaction is less than the preset time period threshold. Therefore, the execution period of the target transaction may be predicted and compared with the preset time period threshold to determine the type of the target transaction. Optionally, considering that the execution period of the target transaction is related to the number of degrees (the number of edges) to be traversed, for example, in response to the target transaction a needing to query a child node of a node, two degrees need to be traversed, and in response to the target transaction b needing to query a grandchild node of the node, three degrees need to be traversed, so the execution period of the target transaction b is longer. Therefore, in this embodiment, a degree threshold when the preset time period threshold is reached may be determined, and then the degree of the node involved in the target transaction is compared with the degree threshold. In response to the degree threshold being exceeded, the target transaction is determined to be the first-type transaction, and in response to the degree threshold being not exceeded, the target transaction is determined to be the second-type transaction.

Considering that the versions in the first memory space and the second memory space may be cleaned up in the garbage collection stage, and the first-type transaction is a transaction with a long execution period, with execution period being longer than the garbage collection period in the memory, in order to prevent the execution of the first-type transaction from affecting the garbage collection of the version in the memory, and also prevent the target version required by the first-type transaction from being cleaned up in the memory, it may be defined that the first-type transaction only uses the version of the target graph data in the disk, and does not use the version of the target graph data in the first memory space or the second memory space, which may ensure the execution of the first-type transaction without affecting the cleaning of the old version in the second memory space, and may effectively reduce the count of versions. The second-type transaction is a transaction with a short execution period, and its execution period is generally shorter than the garbage collection period in the memory, so the second-type transaction may use the version of the target graph data in the first memory space or the second memory space, and certainly may also use the version of the target graph data in the disk.

On this basis, in response to the processing request for the target transaction for the target graph data, the target version of the target graph data required by the target transaction may be acquired. Specifically, in response to the target transaction being the first-type transaction, the target version of the target graph data is acquired from the disk, and in response to the target transaction being the second-type transaction, the target version of the target graph data may be acquired from the first memory space or the second memory space, and then the target transaction may be executed according to the target version of the target graph data, which may better ensure the processing of transactions with different execution periods.

Optionally, acquiring the target version of the target graph data may specifically include:
determining a creation time of the target transaction; and
acquiring, from the disk, a latest version of the target graph data before the creation time and using the latest version as the target version of the target graph data, in response to the target transaction being a first-type transaction; and
acquiring, from the first memory space or the second memory space, a latest version of the target graph data before the creation time and using the latest version as the target version of the target graph data, in response to the target transaction being a second-type transaction.

In this embodiment, when the target transaction is created, the latest version of the target graph data at the creation time needs to be used, but since the target transaction may not be processed in a timely manner after being created, a version update may occur in the time interval from the creation time to the current time, therefore, when the target transaction is processed, the creation time of the target transaction may be first determined, and then the latest version of the target graph data at the creation time is searched for. Specifically, in response to the target transaction being the first-type transaction, the latest version of the target graph data before the creation time of the target transaction is acquired from the disk, that is, a version with a creation time being before the creation time of the target transaction and being closest to the creation time of the target transaction is searched for in the disk. **In** response to the target transaction is the second-type transaction, the latest version of the target graph data before the creation time of the target transaction is acquired from the first memory space or the second memory space, that is, a version with a creation time being before the creation time of the target transaction and being closest to the creation time of the target transaction is searched for in the first memory space and the second memory space. In this way, it may be satisfied that the target transaction may use the latest version of the target graph data at the creation time.

Based on any of the above embodiments, in response to there being a plurality of target transactions that are first-type transactions, the plurality of first-type transactions may be divided into batches according to creation time and the first preset time, where creation time of first-type transactions in a same batch is within a same time window of the first preset time; and

for any batch of first-type transactions, a latest version of the target graph data in the disk in a time window corresponding to the any batch of first-type transactions is acquired, and the any batch of target transactions is executed according to the latest version.

In this embodiment, in response to there being a plurality of first-type transactions, the plurality of first-type transactions may be divided into batches, and the target version of the target graph data used by the transactions in the same batch is the same, so that the target version of the target graph data only needs to be acquired once, which relieves the pressure of disk I/O. The plurality of first-type transactions may be divided into batches according to the creation time of the first-type transaction and the first preset time, and the first-type transactions with a creation time being within the same time window of the first preset time are divided into the same batch, that is, it is assumed that the first preset time is t, the latest version of the target graph data in the first memory space is persisted to the disk at intervals of the first preset time t, it is assumed that the latest version of the target graph data in the first memory space is persisted to the disk at time t0, and the next persistence is performed at time t0+t, and the first-type transactions created in the time window from t0 to t0+t may be divided into the same batch, and the first-type transactions in this batch may use the latest version of the target graph data in the disk, that is, the latest version persisted to the disk at time t0, which may ensure that only one data version needs to be loaded when the first-type data in this batch is executed, relieving the pressure of disk I/O, and the first-type data in this batch will not be affected by the update version of the target graph data, and will not affect the version update of the target graph data.

Based on the above embodiment, in order to prevent a large number of first-type transactions from being executed in a short time and affecting the service stability, the first-type transactions may be limited. Specifically, a plurality of first-type transactions, especially the first-type transactions in the same batch, may be executed by using threads in a preset thread pool, where the preset thread pool has a preset number of threads. For any first-type transaction, in response to there being no idle thread in the preset thread pool, the first-type transaction is waited to be executed until there is an idle thread in the preset thread pool, so that the resources for executing the first-type transaction are constrained, and too many first-type transactions may be prevented from being concurrent and affecting the service stability.

Based on any of the above embodiments, in response to the target transaction being the second-type transaction, the execution time of the second-type transaction is detected; and in response to the execution time of the second-type transaction exceeding the first preset time, the second-type transaction is changed to the first-type transaction, the target version of the target graph data is acquired from the disk, and the first-type transaction that is changed is re-executed according to the target version of the target graph data acquired from the disk.

In this embodiment, the second-type transaction is a transaction with a short execution period, but in some cases, the execution time of the second-type transaction may be too long, exceeding the first preset time, and the second-type transaction may be re-executed as the first-type transaction, that is, the target version of the target graph data is acquired from the disk, and then the first-type transaction that is changed is re-executed, so as to prevent the version originally used by the second-type transaction from being garbage-cleaned up and affecting the execution of the second-type transaction.

Based on any of the above embodiments, acquiring the target version of the target graph data includes:
searching for respective versions of the target graph data from the first memory space, the second memory space, and the disk in sequence based on pointers in respective versions of the target graph data, and constructing a version chain of the target graph data; and acquiring the target version of the target graph data according to the version chain of the target graph data.

In this embodiment, since each version of the target graph data is scattered in the first memory space, the second memory space, and the disk, and each version only includes a pointer to the previous version, each version of the target graph data may be searched for from the first memory space, the second memory space, and the disk in sequence according to the pointer, and the version chain of the target graph data is constructed in sequence, where each version in the version chain of the target graph data may be arranged from new to old, and then the required target version may be acquired through the version chain. Through the process of periodic persistence and garbage collection in the above embodiments, the count of versions may be reduced, that is, the count of versions in the version chain of the target graph data may be reduced, and then the scanning efficiency may be improved during scanning, and the time consumption and resource consumption in the scanning process may be reduced, and the query performance may be improved.

During a specific implementation, when the target version of the target graph data is acquired, in response to the target version not existing in the first memory space or the second memory space, the version in the disk may be loaded by constructing the version chain of the target graph data. In addition, when the version chain is constructed, the complete version chain may not be constructed, and the chain only needs to be constructed up to the target version.

It should be noted that when the latest version of the target graph data in the first memory space is persisted to the disk of the graph database at intervals of the first preset time, the version of the target graph data in the disk also needs to be associated through the pointer, and the version of the target graph data in the disk needs to be associated with the versions of the target data in the first memory space and the second memory space through the pointer, so that the construction of the version chain may be realized.

Through the above embodiments, the count of versions that need to be persisted may be significantly reduced, the disk I/O operations in the persistence process may be reduced, and the system efficiency may be improved. In addition, the first-type transactions are executed in batches, and since the target version of the target graph data only needs to be acquired once for the first-type transactions in the same batch, the count of versions that need to be maintained is also significantly reduced, and lightweight transaction processing is also implemented. Unnecessary old versions are quickly reclaimed, which reduces resource consumption and may effectively improve the overall performance of the system. The second-type transaction may be responded to immediately, the retrieval efficiency is optimized, the system throughput capability is improved, and the negative impact of snapshot isolation on the system throughput is effectively alleviated.

Corresponding to the transaction processing method for the graph database in the above embodiments, Fig. 4 is a structural block diagram of a transaction processing device for a graph database provided by at least one embodiment of the present disclosure. For convenience of explanation, only parts related to the at least one embodiment of the present disclosure are shown. Referring to Fig. 4, the transaction processing device for the graph database 400 includes: an update unit 401 and a graph data management unit 402.

The update unit 401 is configured to, in response to an update instruction for target graph data in a graph database, create a new version of the target graph data in a first memory space used by the graph database, and add a pointer to a previous version of the target graph data in the new version of the target graph data, where the pointer is used for associating the new version of the target graph data with the previous version of the target graph data; and
the graph data management unit 402 is configured to persist a latest version of the target graph data in the first memory space to a disk of the graph database at intervals of a first preset time, and migrate an old version of the target graph data in the first memory space to a second memory space used by the graph database.

According to the transaction processing device for the graph database provided by at least one embodiment of the present disclosure, a new version of target graph data is created in a first memory space used by a graph database in response to an update instruction for the target graph data in the graph database, and a pointer to a previous version of the target graph data is added in the new version of the target graph data, where the pointer is used for associating the new version of the target graph data with the previous version of the target graph data; a latest version of the target graph data in the first memory space is persisted to a disk of the graph database at intervals of a first preset time, and an old version of the target graph data in the first memory space is migrated to a second memory space used by the graph database. **In** the embodiment, by periodically persisting the latest version of the target graph data in the first memory space to the disk of the graph database, the count of times of persisting to the disk may be reduced, and by migrating the old version of the target graph data in the first memory space to the second memory space used by the graph database for subsequent use or reconstruction of a version chain, the occupancy of the first memory space may be reduced to ensure the stability of a service, and it is convenient to uniformly perform garbage collection on old versions, reduce the count of versions, reduce resource consumption, and improve system performance.

In one or more embodiments of the present disclosure, the graph data management unit 402 is further configured to:
filter an old version to be reclaimed from old versions of the target graph data in the second memory space, and perform garbage collection on the old version to be reclaimed, where the old version to be reclaimed is an old version with a creation time being more than a second preset time away from a current time, and the second preset time is greater than or equal to the first preset time.

In one or more embodiments of the present disclosure, the graph data management unit 402 is further configured to:
in response to a processing request for a target transaction for the target graph data, acquire a target version of the target graph data, and execute the target transaction according to the target version of the target graph data,
where, the target version of the target graph data is any version of the target graph data in the disk in response to the target transaction being a first-type transaction, and the target version of the target graph data is any version of the target graph data in the first memory space or the second memory space in response to the target transaction being a second-type transaction, where an execution period of the first-type transaction is greater than an execution period of the second-type transaction.

In one or more embodiments of the present disclosure, when acquiring the target version of the target graph data, the graph data management unit 402 is configured to:
determine a creation time of the target transaction; and
acquire, from the disk, a latest version of the target graph data before the creation time and use the latest version as the target version of the target graph data, in response to the target transaction being a first-type transaction; and
acquire, from the first memory space or the second memory space, a latest version of the target graph data before the creation time and use the latest version as the target version of the target graph data in response to the target transaction being a second-type transaction.

In one or more embodiments of the present disclosure, when acquiring the target version of the target graph data and executing the target transaction according to the target version of the target graph data, the graph data management unit 402 is configured to:
divide, in response to there being a plurality of target transactions that are first-type transactions, the plurality of first-type transactions into batches according to creation time and the first preset time, where creation time of first-type transactions in a same batch is within a same time window of the first preset time; and
acquire, for any batch of first-type transactions, a latest version of the target graph data in the disk in a time window corresponding to the any batch of first-type transactions, and execute the any batch of target transactions according to the latest version.

In one or more embodiments of the present disclosure, the graph data management unit 402 is further configured to:
execute a plurality of first-type transactions by using threads in a preset thread pool, where the preset thread pool has a preset number of threads; and
wait, for any one of the plurality of first-type transactions, until there is an idle thread in the preset thread pool and then execute the any one of the plurality of first-type transactions, in response to there being no idle thread in the preset thread pool.

In one or more embodiments of the present disclosure, when acquiring the target version of the target graph data, the graph data management unit 402 is configured to:
based on pointers in respective versions of the target graph data, search for the respective versions of the target graph data from the first memory space, the second memory space, and the disk in sequence, and construct a version chain of the target graph data; and
acquire the target version of the target graph data according to the version chain of the target graph data.

In one or more embodiments of the present disclosure, when executing the target transaction according to the target version of the target graph data, the graph data management unit 402 is further configured to:
in response to the target transaction being the second-type transaction, detect execution time of the second-type transaction; and
in response to the execution time of the second-type transaction exceeding the first preset time, change the second-type transaction to the first-type transaction, acquire the target version of the target graph data from the disk, and re-execute the first-type transaction that is changed according to the target version of the target graph data.

In one or more embodiments of the present disclosure, when migrating the old version of the target graph data in the first memory space to the second memory space used by the graph database, the graph data management unit 402 is configured to:
in response to remaining space of the first memory space being less than a preset threshold or at intervals of the first preset time, migrate the old version of the target graph data in the first memory space to the second memory space.

The device provided by this embodiment may be used to implement the technical solutions of the above method embodiments, and the implementation principles and technical effects thereof are similar, and details are not described herein again in this embodiment.

In order to implement the above embodiments, at least one embodiment of the present disclosure further provides an electronic device.

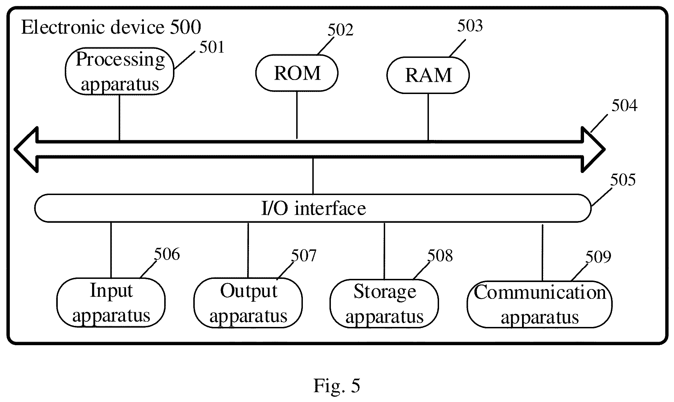

Referring to Fig. 5, Fig. 5 shows a schematic structural diagram of an electronic device 500 suitable for implementing at least one embodiment of the present disclosure, and the electronic device 500 may be a terminal device or a server. The terminal device may include, but is not limited to, mobile terminals, such as mobile phones, notebook computers, digital broadcast receivers, personal digital assistants (abbreviated as PDA), tablet computers, portable media players (abbreviated as PMP), vehicle terminals (such as vehicle navigation terminals), etc., and fixed terminals, such as digital TVs, desktop computers, etc. The electronic device shown in Fig. 5 is only an example, and should not impose any limitation on the function and use scope of at least one embodiment of the present disclosure.

As shown in Fig. 5, the electronic device 500 may include a processing apparatus (such as a central processing unit, a graphics processor, etc.) 501, which may perform various appropriate actions and processing according to a program stored in a read-only memory (abbreviated as ROM) 502 or a program loaded from a storage apparatus 508 into a random access memory (abbreviated as RAM) 503. The RAM 503 also stores various programs and data required for the operation of the electronic device 500. The processing apparatus 501, the ROM 502, and the RAM 503 are connected to each other through a bus 504. An input/output (I/O) interface 505 is also connected to the bus 504.

Usually, the following apparatuses may be connected to the I/O interface 505: an input apparatus 506, such as a touch screen, a touchpad, a keyboard, a mouse, a camera, a microphone, an accelerometer, and a gyroscope, etc.; an output apparatus 507, such as a liquid crystal display (abbreviated as LCD), a speaker, and a vibrator; a storage apparatus 508, such as a magnetic tape and a hard disk, etc.; and a communication apparatus 509. The communication apparatus 509 may allow the electronic device 500 to perform wireless or wired communication with other devices to exchange data. Although Fig. 5 shows the electronic device 500 having various apparatuses, it should be understood that it is not required to implement or have all the apparatuses shown. Alternatively, more or fewer apparatuses may be implemented or provided.

In particular, according to at least one embodiment of the present disclosure, the process described above with reference to the flowchart may be implemented as a computer software program. For example, the embodiments of the present disclosure include a computer program product, which includes a computer program carried on a computer-readable storage medium, where the computer program contains program codes for executing the method shown in the flowchart. In such an embodiment, the computer program may be downloaded and installed from a network through the communication apparatus 509, or installed from the storage apparatus 508, or installed from the ROM 502. When the computer program is executed by the processing apparatus 501, the above-mentioned functions defined in the method of at least one embodiment of the present disclosure are executed.

It should be noted that the above-mentioned computer-readable storage medium in the present disclosure may be a computer-readable signal medium, a computer-readable storage medium, or any combination of the above two. The computer-readable storage medium may be, for example, but not limited to, an electrical, magnetic, optical, electromagnetic, infrared, or semi-conductive system, apparatus, device, or any combination of the above. More specific examples of the computer-readable storage medium may include, but are not limited to: an electrically connected portable computer disk with one or more wires, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium that contains or stores a program, which may be used by or in combination with an instruction execution system, apparatus, or device. In the present disclosure, a computer-readable signal medium may include a data signal propagated in a baseband or as a part of a carrier, and computer-readable program codes are carried therein. This propagated data signal may take many forms, including but not limited to an electromagnetic signal, an optical signal, or any suitable combination of the above. The computer-readable signal medium may also be any computer-readable storage medium other than the computer-readable storage medium, and the computer-readable signal medium may send, propagate, or transmit the program used by or in combination with the instruction execution system, apparatus, or device. The program codes contained on the computer-readable storage medium may be transmitted by any suitable medium, including but not limited to: a wire, an optical cable, an RF (radio frequency), etc., or any suitable combination of the above.

The above-mentioned computer-readable storage medium may be included in the above-mentioned electronic device, or may exist alone without being assembled into the electronic device.

The above-mentioned computer-readable storage medium carries one or more programs, and when the above-mentioned one or more programs are executed by the electronic device, the electronic device is caused to execute the method shown in the above-mentioned embodiments.

The computer program codes for executing the operations of the present disclosure may be written in one or more programming languages or a combination thereof. The above-mentioned programming languages include object-oriented programming languages, such as Java, Smalltalk, and C++, and may also include conventional procedural programming languages, such as "C" language or similar programming languages. The program codes may be executed entirely on a user computer, partly executed on a user computer, executed as an independent software package, partly executed on a user computer and partly executed on a remote computer, or entirely executed on a remote computer or a server. In the case of involving a remote computer, the remote computer may be connected to the user computer through any kind of network, including a local area network (abbreviated as LAN) or a wide area network (abbreviated as WAN), or it may be connected to an external computer (for example, connected by using Internet provided by an Internet service provider).

The flowchart and block diagrams in the drawings illustrate the architecture, functionality, and operation of possible implementations of systems, methods and computer program products according to various embodiments of the present disclosure. In this regard, each block in the flowchart or block diagrams may represent a module, program segment, or portion of code, which includes one or more executable instructions for implementing the specified logical function(s). It should also be noted that, in some alternative implementations, the functions noted in the block may occur in an order different from that noted in the drawings. For example, two blocks shown in succession may, in fact, be executed substantially concurrently, or the blocks may sometimes be executed in a reverse order, depending upon the functionality involved. It will also be noted that each block of the block diagrams and/or flowchart, and combinations of blocks in the block diagrams and/or flowchart, may be implemented by special purpose hardware-based systems that perform the specified functions or operations, or combinations of special purpose hardware and computer instructions.

The units involved in at least one embodiment of the present disclosure may be implemented by software or hardware. The name of a unit does not constitute a limitation on the unit itself under certain circumstances. For example, the first acquiring unit may also be described as a "unit for acquiring at least two internet protocol addresses".

The functions described above herein may be performed, at least in part, by one or more hardware logic components. For example, non-restrictively, exemplary types of hardware logic components that may be used include: field programmable gate array (FPGA), application specific integrated circuit (ASIC), application specific standard product (ASSP), system on chip (SOC), complex programmable logical device (CPLD), etc.

According to the electronic device, the computer-readable storage medium, and the computer program product provided by at least one embodiment of the present disclosure, a new version of target graph data is created in a first memory space used by a graph database in response to an update instruction for the target graph data in the graph database, and a pointer to a previous version of the target graph data is added in the new version of the target graph data, where the pointer is used for associating the new version of the target graph data with the previous version of the target graph data; a latest version of the target graph data in the first memory space is persisted to a disk of the graph database at intervals of a first preset time, and an old version of the target graph data in the first memory space is migrated to a second memory space used by the graph database. In the embodiments, by periodically persisting the latest version of the target graph data in the first memory space to the disk of the graph database, the count of times of persisting to the disk may be reduced, and by migrating the old version of the target graph data in the first memory space to the second memory space used by the graph database for subsequent use or reconstruction of a version chain, the occupancy of the first memory space may be reduced to ensure the stability of a service, and it is convenient to uniformly perform garbage collection on old versions, reduce the count of versions, reduce resource consumption, and improve system performance.

According to one or more embodiments of the present disclosure, a transaction processing method for a graph database is provided, including:
creating a new version of target graph data in a first memory space used by the graph database and adding a pointer to a previous version of the target graph data in the new version of the target graph data, in response to an update instruction for target graph data in a graph database, where the pointer is used for associating the new version of the target graph data with the previous version of the target graph data;
persisting a latest version of the target graph data in the first memory space to a disk of the graph database at intervals of a first preset time; and
migrating an old version of the target graph data in the first memory space to a second memory space used by the graph database.

According to one or more embodiments of the present disclosure, the method further includes:
filtering an old version to be reclaimed from old versions of the target graph data in the second memory space, and performing garbage collection on the old version to be reclaimed, where the old version to be reclaimed is an old version with a creation time being more than a second preset time away from a current time, and the second preset time is greater than or equal to the first preset time.

According to one or more embodiments of the present disclosure, the method further includes:
in response to a processing request for a target transaction for the target graph data, acquiring a target version of the target graph data, and executing the target transaction according to the target version of the target graph data,
where, the target version of the target graph data is any version of the target graph data in the disk in response to the target transaction being a first-type transaction, and the target version of the target graph data is any version of the target graph data in the first memory space or the second memory space in response to the target transaction being a second-type transaction, where an execution period of the first-type transaction is greater than an execution period of the second-type transaction.

According to one or more embodiments of the present disclosure, acquiring the target version of the target graph data includes:
determining a creation time of the target transaction; and
acquiring, from the disk, a latest version of the target graph data before the creation time and using the latest version as the target version of the target graph data, in response to the target transaction being a first-type transaction; and
acquiring, from the first memory space or the second memory space, a latest version of the target graph data before the creation time and using the latest version as the target version of the target graph data, in response to the target transaction being a second-type transaction.

According to one or more embodiments of the present disclosure, acquiring the target version of the target graph data, and executing the target transaction according to the target version of the target graph data includes:
dividing, in response to there being a plurality of target transactions that are first-type transactions, the plurality of first-type transactions into batches according to creation time and the first preset time, where creation time of first-type transactions in a same batch is within a same time window of the first preset time; and
acquiring, for any batch of first-type transactions, a latest version of the target graph data in the disk in a time window corresponding to the any batch of first-type transactions, and executing the any batch of target transactions according to the latest version.

According to one or more embodiments of the present disclosure, the method further includes:
executing a plurality of first-type transactions by using threads in a preset thread pool, where the preset thread pool has a preset number of threads; and
waiting, for any one of the plurality of first-type transactions, until there is an idle thread in the preset thread pool and then executing the any one of the plurality of first-type transactions, in response to there being no idle thread in the preset thread pool.

According to one or more embodiments of the present disclosure, the acquiring the latest version of the target graph data in the disk includes:
based on pointers in respective versions of the target graph data, searching for the respective versions of the target graph data from the first memory space, the second memory space, and the disk in sequence, and constructing a version chain of the target graph data; and
determining the latest version of the target graph data in the disk from the version chain of the target graph data, and acquiring the latest version of the target graph data in the disk.

According to one or more embodiments of the present disclosure, after executing the target transaction according to the latest version of the target graph data in the memory, the method further includes:
detecting execution time of the target transaction; and
in response to the execution time of the target transaction exceeding the first preset time, changing the target transaction to the first-type transaction, acquiring the latest version of the target graph data in the disk, and re-executing the target transaction according to the latest version of the target graph data in the disk.

According to one or more embodiments of the present disclosure, migrating the old version of the target graph data in the first memory space to the second memory space used by the graph database includes:
in response to remaining space of the first memory space being less than a preset threshold or at intervals of the first preset time, migrating the old version of the target graph data in the first memory space to the second memory space.

According to one or more embodiments of the present disclosure, a transaction processing device for a graph database is provided, including:
an update unit, configured to, in response to an update instruction for target graph data in a graph database, create a new version of the target graph data in a first memory space used by the graph database, and add a pointer to a previous version of the target graph data in the new version of the target graph data, where the pointer is used for associating the new version of the target graph data with the previous version of the target graph data; and
a graph data management unit, configured to persist a latest version of the target graph data in the first memory space to a disk of the graph database at intervals of a first preset time, and migrate an old version of the target graph data in the first memory space to a second memory space used by the graph database.

According to one or more embodiments of the present disclosure, the graph data management unit is further configured to:
filter an old version to be reclaimed from old versions of the target graph data in the second memory space, and perform garbage collection on the old version to be reclaimed, where the old version to be reclaimed is an old version with a creation time being more than a second preset time away from a current time, and the second preset time is greater than or equal to the first preset time.

According to one or more embodiments of the present disclosure, the graph data management unit is further configured to:
in response to a processing request for a target transaction for the target graph data, acquire a target version of the target graph data, and execute the target transaction according to the target version of the target graph data,
where, the target version of the target graph data is any version of the target graph data in the disk in response to the target transaction being a first-type transaction,, and the target version of the target graph data is any version of the target graph data in the first memory space or the second memory space in response to the target transaction being a second-type transaction,, where an execution period of the first-type transaction is greater than an execution period of the second-type transaction.

According to one or more embodiments of the present disclosure, when acquiring the target version of the target graph data, the graph data management unit is configured to:
determine a creation time of the target transaction; and
acquire, from the disk, a latest version of the target graph data before the creation time, and use the latest version as the target version of the target graph data, in response to the target transaction being a first-type transaction; and
acquire, from the first memory space or the second memory space, a latest version of the target graph data before the creation time and use the latest version as the target version of the target graph data, in response to the target transaction being a second-type transaction.

According to one or more embodiments of the present disclosure, when acquiring the target version of the target graph data and executing the target transaction according to the target version of the target graph data, the graph data management unit is configured to:
divide, in response to there being a plurality of target transactions that are first-type transactions, the plurality of first-type transactions into batches according to creation time and the first preset time, where creation time of first-type transactions in a same batch is within a same time window of the first preset time; and
acquire, for any batch of first-type transactions, a latest version of the target graph data in the disk in a time window corresponding to the any batch of first-type transactions, and execute the any batch of target transactions according to the latest version.

According to one or more embodiments of the present disclosure, the graph data management unit is further configured to:
execute a plurality of first-type transactions by using threads in a preset thread pool, where the preset thread pool has a preset number of threads; and
wait, for any one of the plurality of first-type transactions, until there is an idle thread in the preset thread pool and then execute the any one of the plurality of first-type transactions in response to there being no idle thread in the preset thread pool.

According to one or more embodiments of the present disclosure, when acquiring the target version of the target graph data, the graph data management unit is configured to:
based on pointers in respective versions of the target graph data, search for the respective versions of the target graph data from the first memory space, the second memory space, and the disk in sequence, and construct a version chain of the target graph data; and
acquire the target version of the target graph data according to the version chain of the target graph data.

According to one or more embodiments of the present disclosure, when executing the target transaction according to the target version of the target graph data, the graph data management unit is further configured to:
detect execution time of the second-type transaction in response to the target transaction being a second-type transaction; and
change the second-type transaction to the first-type transaction, acquire the target version of the target graph data from the disk, and re-execute the first-type transaction that is changed according to the target version of the target graph data, in response to the execution time of the second-type transaction exceeding the first preset time.

According to one or more embodiments of the present disclosure, when migrating the old version of the target graph data in the first memory space to the second memory space used by the graph database, the graph data management unit is configured to:
in response to remaining space of the first memory space being less than a preset threshold or at intervals of the first preset time, migrate the old version of the target graph data in the first memory space to the second memory space.

According to one or more embodiments of the present disclosure, an electronic device is provided, the electronic device includes at least one processor and a memory,
the memory stores computer-executable instructions; and
the at least one processor executes the computer-executable instructions stored in the memory, causing the at least one processor to execute the transaction processing method for the graph database described above.

According to one or more embodiments of the present disclosure, a computer-readable storage medium is provided, where computer-executable instructions are stored in the computer-readable storage medium, and when the computer-executable instructions are executed by a processor, the transaction processing method for the graph database described above is implemented.

According to one or more embodiments of the present disclosure, a computer program product is provided, including a computer program, where when the computer program is executed by a processor, the transaction processing method for the graph database described above is implemented.

In summary, a new version of target graph data is created in a first memory space used by a graph database in response to an update instruction for the target graph data in the graph database, and a pointer to a previous version of the target graph data is added in the new version of the target graph data, where the pointer is used for associating the new version of the target graph data with the previous version of the target graph data; a latest version of the target graph data in the first memory space is persisted to a disk of the graph database at intervals of a first preset time, and an old version of the target graph data in the first memory space is migrated to a second memory space used by the graph database. In the embodiments, by periodically persisting the latest version of the target graph data in the first memory space to the disk of the graph database, the count of times of persisting to the disk may be reduced, and by migrating the old version of the target graph data in the first memory space to the second memory space used by the graph database for subsequent use or reconstruction of a version chain, the occupancy of the first memory space may be reduced to ensure the stability of a service, and it is convenient to uniformly perform garbage collection on old versions, reduce the count of versions, reduce resource consumption, and improve system performance.

The above description is only a preferred embodiment of the present disclosure and an illustration of the technical principles employed. Those skilled in the art should understand that the scope of disclosure involved in the present disclosure is not limited to the technical solutions formed by the specific combination of the above-mentioned technical features, and should also cover, without departing from the above-mentioned disclosed concept, other technical solutions formed by any combination of the above-mentioned technical features or their equivalent features. For example, a technical solution formed by replacing the above features with technical features with similar functions disclosed in the present disclosure (but not limited to).

Additionally, although operations are depicted in a particular order, it should not be understood that these operations are required to be performed in a specific order as illustrated or in a sequential order. Under certain circumstances, multitasking and parallel processing may be advantageous. Likewise, although the above discussion includes several specific implementation details, these should not be interpreted as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combinations.

Although the subject matter has been described in language specific to structural features and/or method logical actions, it should be understood that the subject matter defined in the appended claims is not necessarily limited to the specific features or actions described above. Rather, the specific features and actions described above are merely example forms of implementing the claims.

## Claims

1. A transaction processing method for a graph database, comprising:
creating a new version of target graph data in a first memory space used by the graph database and adding a pointer to a previous version of the target graph data in the new version of the target graph data, in response to an update instruction for the target graph data in the graph database, wherein the pointer is used for associating the new version of the target graph data with the previous version of the target graph data (S201);
persisting a latest version of the target graph data in the first memory space to a disk of the graph database at intervals of a first preset time (S202); and
migrating an old version of the target graph data in the first memory space to a second memory space used by the graph database (S203).

2. The transaction processing method of claim 1, further comprising:
filtering an old version to be reclaimed from old versions of the target graph data in the second memory space, and performing garbage collection on the old version to be reclaimed, wherein the old version to be reclaimed is an old version with a creation time being more than a second preset time away from a current time, and the second preset time is greater than or equal to the first preset time.

3. The transaction processing method of claim 1 or 2, further comprising:
acquiring a target version of the target graph data (S301) and executing a target transaction according to the target version of the target graph data (S302), in response to a processing request for the target transaction for the target graph data,
wherein the target version of the target graph data is any version of the target graph data in the disk in response to the target transaction being a first-type transaction, and the target version of the target graph data is any version of the target graph data in the first memory space or the second memory space in response to the target transaction being a second-type transaction, wherein an execution period of the first-type transaction is greater than an execution period of the second-type transaction.

4. The transaction processing method of claim 3, wherein the acquiring the target version of the target graph data (S301) comprises:
determining a creation time of the target transaction;
acquiring, from the disk, a latest version of the target graph data before the creation time and using the latest version as the target version of the target graph data, in response to the target transaction being the first-type transaction; and
acquiring, from the first memory space or the second memory space, a latest version of the target graph data before the creation time and using the latest version as the target version of the target graph data, in response to the target transaction being the second-type transaction.

5. The transaction processing method of claim 3 or 4, wherein the acquiring the target version of the target graph data (S301) and executing the target transaction according to the target version of the target graph data (S302) comprises:
dividing, in response to there being a plurality of target transactions that are first-type transactions, the plurality of first-type transactions into batches according to creation time and the first preset time, wherein creation time of first-type transactions in a same batch is within a same time window of the first preset time; and
acquiring, for any batch of first-type transactions, a latest version of the target graph data in the disk in a time window corresponding to the any batch of first-type transactions, and executing the any batch of target transactions according to the latest version.

6. The transaction processing method of any one of claims 3 to 5, further comprising:
executing a plurality of first-type transactions by using threads in a preset thread pool, wherein the preset thread pool has a preset number of threads; and
waiting, for any one of the plurality of first-type transactions, until there is an idle thread in the preset thread pool and then executing the any one of the plurality of first-type transactions, in response to there being no idle thread in the preset thread pool.

7. The transaction processing method of any one of claims 3 to 6, wherein the acquiring the target version of the target graph data (S301) comprises:
searching for respective versions of the target graph data from the first memory space, the second memory space, and the disk in sequence based on pointers in the respective versions of the target graph data, and constructing a version chain of the target graph data; and
acquiring the target version of the target graph data according to the version chain of the target graph data.

8. The transaction processing method of any one of claims 3 to 7, wherein the executing the target transaction according to the target version of the target graph data (S302) further comprises:
detecting execution time of the second-type transaction in response to the target transaction being the second-type transaction; and
changing the second-type transaction to the first-type transaction, acquiring the target version of the target graph data from the disk and re-executing the first-type transaction that is changed according to the target version of the target graph data, in response to the execution time of the second-type transaction exceeding the first preset time.

9. The transaction processing method of any one of claims 1 to 8, wherein the migrating the old version of the target graph data in the first memory space to the second memory space used by the graph database (S203) comprises:
migrating the old version of the target graph data in the first memory space to the second memory space in
response to remaining space of the first memory space being less than a preset threshold or at intervals of the first preset time.

10. A transaction processing device for a graph database, comprising:
an update unit (401), configured to, in response to an update instruction for target graph data in a graph database, create a new version of the target graph data in a first memory space used by the graph database, and add a pointer to a previous version of the target graph data in the new version of the target graph data, wherein the pointer is used for associating the new version of the target graph data with the previous version of the target graph data; and
a graph data management unit (402), configured to persist a latest version of the target graph data in the first memory space to a disk of the graph database at intervals of a first preset time, and migrate an old version of the target graph data in the first memory space to a second memory space used by the graph database.

11. An electronic device, comprising at least one processor (501) and a memory (508),
wherein the memory (508) has computer-executable instructions stored thereon; and
the at least one processor (501) is configured to execute the computer-executable instruction stored in the memory (508) to execute the transaction processing method of any of claims 1 to 9.

12. A computer-readable storage medium, storing computer-executable instructions, wherein when the computer-executable instructions are executed by at least one processor, the transaction processing method of any of claims 1 to 9 is implemented.

13. A computer program product, comprising a computer program, wherein when the computer program is executed by a processor, the transaction processing method of any of claims 1 to 9 is implemented.
